# EUROPEAN PATENT APPLICATION

(11) **EP 4 783 694 A1**
(43) Date of publication of application: **29.07.2026**
(21) Application number: 24867340.2
(22) Date of filing: 11.09.2024
(51) Int. Cl.: H04W 72/0446

(54) **GAP PROCESSING METHOD AND APPARATUS, USER EQUIPMENT, AND NETWORK SIDE DEVICE**

(30) Priority: 18.09.2023 CN 202311202874
(71) Applicant: Vivo Mobile Communication Co., Ltd., Dongguan, Guangdong 523863 (CN)
(72) Inventor: LIU, Xuanbing, Dongguan, Guangdong 523863 (CN); YANG, Xiaodong, Dongguan, Guangdong 523863 (CN)
(74) Representative: Walaski, Jan Filip
(86) International application number: PCT/CN2024/118100
(87) International publication number: WO 2025/060928

(57) **Abstract**

The present application relates to the technical field of communications, and discloses a gap processing method and apparatus, a user equipment (UE), and a network side device. The gap processing method in embodiments of the present application comprises: a master node performs a first operation on a secondary node, wherein the first operation comprises any one of the following: sending first indication information, the first indication information being used for indicating a conflict processing mode of a first gap; sending a first request message, the first request message being used for requesting the conflict processing mode of the first gap; when target uplink information sent by a UE is monitored during a second gap, ignoring the second gap, and sending second indication information to the secondary node, the second indication information being used for indicating that the second gap has been ignored; and receiving third indication information from the secondary node, the third indication information being used for indicating that the second gap has been ignored, and the second gap being a gap where the UE has sent the target uplink information.

## Description

### CROSS-REFERENCE TO RELATED APPLICATIONS

This application claims priority to Chinese Patent Application No. 202311202874.0 filed in China on September 18, 2023, which is incorporated herein by reference in its entirety.

### TECHNICAL FIELD

This application belongs to the field of communication technologies, and specifically relates to a gap processing method and apparatus, user equipment, and a network-side device.

### BACKGROUND

With the development of communication technologies, in communication systems, to ensure the reliability of communication, various gaps (Gap) are usually set, such as multi-universal subscriber identity module (Multi-Universal Subscriber Identity Module, MUSIM) gaps and measurement gaps. However, in a connection state of multi-radio access technology (Radio Access Technology, RAT) dual connectivity (Multi-RAT Dual Connectivity, MR-DC), how a master node (Master Node, MN) and a secondary node (Secondary Node, SN) maintain a consistent understanding of a gap state (such as use or conflict resolution) has become an urgent problem to be solved.

### SUMMARY

Embodiments of this application provide a gap processing method and apparatus, user equipment, and a network-side device, which can solve the problem of how a master node and a secondary node maintain a consistent understanding of a gap state in a connection state of MR-DC.

According to a first aspect, a gap processing method is provided, including:
performing, by a master node, a first operation towards a secondary node, where the first operation includes any one of the following:
sending first indication information, where the first indication information is used to indicate a conflict handling manner for a first gap;
sending a first request message, where the first request message is used to request a conflict handling manner for a first gap;
ignoring a second gap and sending second indication information to the secondary node in a case that target uplink information sent by user equipment has been detected during the second gap, where the second indication information is used to indicate that the second gap is ignored; and
receiving third indication information from the secondary node, where the third indication information is used to indicate that the second gap is ignored and the second gap is a gap in which the user equipment has sent target uplink information.

According to a second aspect, a gap processing method is provided, including:
performing, by a secondary node, a second operation, where the second operation includes at least one of the following:
receiving first indication information, where the first indication information is used to indicate a conflict handling manner for a first gap;
receiving a first request message, where the first request message is used to request a conflict handling manner for a first gap;
receiving second indication information from a master node, where the second indication information is used to indicate that a second gap is ignored and the second gap is a gap in which user equipment has sent target uplink information; and
ignoring a second gap and sending third indication information to the secondary node in a case that target uplink information sent by the user equipment has been detected during the second gap, where the third indication information is used to indicate that the second gap is ignored.

According to a third aspect, a gap processing method is provided, including:
sending, by user equipment, target uplink information during a second gap, where the target uplink information includes at least one of the following:
uplink data of a preset channel;
configuration-supported uplink data;
physical information;
a media access control (Medium Access Control, MAC) message;
a radio resource control (Radio Resource Control, RRC) message; and
a non-access stratum (Non-Access Stratum, NAS) message.

According to a fourth aspect, a gap processing apparatus is provided, including:
a first execution module, configured to perform a first operation towards a secondary node, where the first operation includes any one of the following:
sending first indication information, where the first indication information is used to indicate a conflict handling manner for a first gap;
sending a first request message, where the first request message is used to request a conflict handling manner for a first gap;
ignoring a second gap and sending second indication information to the secondary node in a case that target uplink information sent by user equipment has been detected during the second gap, where the second indication information is used to indicate that the second gap is ignored; and
receiving third indication information from the secondary node, where the third indication information is used to indicate that the second gap is ignored and the second gap is a gap in which the user equipment has sent target uplink information.

According to a fifth aspect, a gap processing apparatus is provided, including:
a second execution module, configured to perform a second operation, where the second operation includes at least one of the following:
receiving first indication information, where the first indication information is used to indicate a conflict handling manner for a first gap;
receiving a first request message, where the first request message is used to request a conflict handling manner for a first gap;
receiving second indication information from a master node, where the second indication information is used to indicate that a second gap is ignored and the second gap is a gap in which user equipment has sent target uplink information; and
ignoring a second gap and sending third indication information to the secondary node in a case that target uplink information sent by the user equipment has been detected during the second gap, where the third indication information is used to indicate that the second gap is ignored.

According to a sixth aspect, a gap processing apparatus is provided, including:
a sending module, configured to send target uplink information during a second gap, where the target uplink information includes at least one of the following:
uplink data of a preset channel;
configuration-supported uplink data;
physical information;
a media access control MAC message;
a radio resource control RRC message; and
a non-access stratum NAS message.

According to a seventh aspect, user equipment is provided. The user equipment includes a processor and a memory, where the memory stores a program or instructions executable on the processor, and when the program or instructions are executed by the processor, the steps of the method according to the third aspect are implemented.

According to an eighth aspect, user equipment is provided, including a processor and a communication interface, where the communication interface is configured to send target uplink information during a second gap, and the target uplink information includes at least one of the following:
uplink data of a preset channel;
configuration-supported uplink data;
physical information;
a media access control MAC message;
a radio resource control RRC message; and
a non-access stratum NAS message.

According to a ninth aspect, a network-side device is provided. The network-side device includes a processor and a memory, where the memory stores a program or instructions executable on the processor, and when the program or instructions are executed by the processor, the steps of the method according to the second aspect are implemented.

According to a tenth aspect, a network-side device is provided, including a processor and a communication interface, where
when the network-side device is a master node, the communication interface is configured to perform a first operation towards a secondary node, where the first operation includes any one of the following:
sending first indication information, where the first indication information is used to indicate a conflict handling manner for a first gap;
sending a first request message, where the first request message is used to request a conflict handling manner for a first gap;
ignoring a second gap and sending second indication information to the secondary node in a case that target uplink information sent by user equipment has been detected during the second gap, where the second indication information is used to indicate that the second gap is ignored; and
receiving third indication information from the secondary node, where the third indication information is used to indicate that the second gap is ignored and the second gap is a gap in which the user equipment has sent target uplink information.

When the network-side device is a master node, the communication interface is configured to perform a second operation, where the second operation including at least one of the following:
receiving first indication information, where the first indication information is used to indicate a conflict handling manner for a first gap;
receiving a first request message, where the first request message is used to request a conflict handling manner for a first gap;
receiving second indication information from the master node, where the second indication information is used to indicate that the second gap is ignored and the second gap is a gap in which the user equipment has sent target uplink information; and
ignoring a second gap and sending third indication information to the secondary node in a case that target uplink information sent by the user equipment has been detected during the second gap, where the third indication information is used to indicate that the second gap is ignored.

According to an eleventh aspect, a readable storage medium is provided, where a program or instructions are stored on the readable storage medium, and when the program or instructions are executed by a processor, the steps of the method according to the first aspect are implemented, the steps of the method according to the second aspect are implemented, or the steps of the method according to the third aspect are implemented.

According to a twelfth aspect, a wireless communication system is provided, including: user equipment and a network-side device. The user equipment may be configured to perform the steps of the method according to the third aspect, and the network-side device may be configured to perform the steps of the method according to the first aspect or implement the steps of the method according to the second aspect.

According to a thirteenth aspect, a chip is provided. The chip includes a processor and a communication interface. The communication interface is coupled to the processor, and the processor is configured to run a program or instructions to implement the method according to the first aspect, implement the method according to the second aspect, or implement the steps of the method according to the third aspect.

According to a fourteenth aspect, a computer program/program product is provided, where the computer program/program product is stored in a storage medium, and the program/program product is executed by at least one processor to implement the method according to the first aspect, implement the method according to the second aspect, or implement the steps of the method according to the third aspect.

In the embodiments of this application, the master node performs a first operation towards the secondary node, and the first operation includes any one of the following: sending first indication information, where the first indication information is used to indicate a conflict handling manner for a first gap; sending a first request message, where the first request message is used to request a conflict handling manner for a first gap; ignoring a second gap and sending second indication information to the secondary node in a case that target uplink information sent by user equipment has been detected during the second gap, where the second indication information is used to indicate that the second gap is ignored; and receiving third indication information from the secondary node, where the third indication information is used to indicate that the second gap is ignored and the second gap is a gap in which the user equipment has sent target uplink information. This can ensure that the master node and the secondary node have a consistent understanding of a gap state, thereby improving the reliability of communication.

### BRIEF DESCRIPTION OF DRAWINGS

FIG. 1 is a block diagram of a wireless communication system to which embodiments of this application are applicable;
FIG. 2 is a schematic flowchart of a gap processing method provided by an embodiment of this application;
FIG. 3 is a schematic flowchart of another gap processing method provided by an embodiment of this application;
FIG. 4 is a schematic flowchart of still another gap processing method provided by an embodiment of this application;
FIG. 5 is a schematic structural diagram of a gap processing apparatus provided by an embodiment of this application;
FIG. 6 is a schematic structural diagram of another gap processing apparatus provided by an embodiment of this application;
FIG. 7 is a schematic structural diagram of still another gap processing apparatus provided by an embodiment of this application;
FIG. 8 is a schematic structural diagram of a communication device provided by an embodiment of this application;
FIG. 9 is a schematic structural diagram of user equipment provided by an embodiment of this application; and
FIG. 10 is a schematic structural diagram of a network-side device provided by an embodiment of this application.

### DESCRIPTION OF EMBODIMENTS

The terms "first", "second", and the like in this application are used to distinguish similar objects and are not used to describe a specific order or sequence. It should be understood that the terms used in this way can be interchanged under appropriate circumstances, so that the embodiments of this application can be implemented in sequences other than those illustrated or described herein, and the objects distinguished by "first" and "second" are usually of one type, without limiting the number of the objects. For example, there may be one or multiple first objects. In addition, the "or" in this application indicates at least one of the connected objects. For example, "A or B" covers three cases, which are, case 1: A is included but B is not included; case 2: B is included but A is not included; and case 3: both A and B are included. The character "/" generally indicates that the contextually associated objects are in an "or" relationship.

The term "indication" in this application may be either a direct indication (or an explicit indication), or may be an indirect indication (or an implicit indication). The direct indication can be understood as that a sender explicitly informs a receiver of content such as specific information, operations to be executed, or request results in a sent indication; the indirect indication can be understood as that a receiver determines corresponding information according to an indication sent by a sender, or makes a determination and determines operations to be executed, request results, or the like according to determination results.

It should be noted that the technology described in the embodiments of this application is not limited to long term evolution (Long Term Evolution, LTE)/LTE advanced (LTE-Advanced, LTE-A) systems, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the described technology can be used not only in the above-mentioned systems and radio technologies, but also in other systems and radio technologies. The following description describes the new radio (New Radio, NR) system for exemplary purposes, and uses NR terminology in most of the following descriptions, but these technologies can also be applied to systems other than the NR system, such as the 6th generation (6^{th} Generation, 6G) communication system.

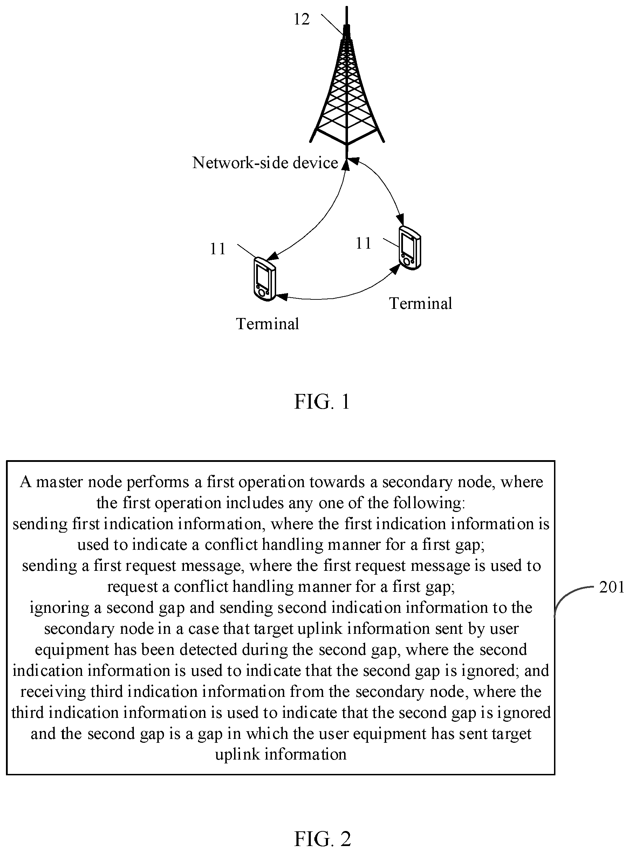

FIG. 1 shows a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), a shipborne device, pedestrian user equipment (Pedestrian User Equipment, PUE), smart home (home devices with wireless communication functions, such as refrigerators, TVs, washing machines, or furniture), a game console, a personal computer (Personal Computer, PC), a teller machine, or a self-service machine. Wearable devices include: smart watches, smart bracelets, smart headphones, smart glasses, smart jewelry (smart bangles, smart bracelets, smart rings, smart necklaces, smart ankle bracelets, smart foot chains, and the like), smart wristbands, smart clothing, and the like. Vehicle user equipment may also be referred to as vehicle-mounted terminals, vehicle-mounted controllers, vehicle-mounted modules, vehicle-mounted components, vehicle-mounted chips, vehicle-mounted units, or the like. It should be noted that a specific type of the terminal 11 is not limited in the embodiments of this application. The network-side device 12 may include access network devices or core network devices, where the access network devices can also be referred to as radio access network (Radio Access Network, RAN) devices, radio access network functions, or radio access network units. The access network devices may include base stations, wireless local area network (Wireless Local Area Network, WLAN) access points (Access Point, AP), wireless fidelity (Wireless Fidelity, WiFi) nodes, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or other appropriate terms in the art, as long as the same technical effects are achieved, and the base station is not limited to specific technical terminology. It should be noted that in the embodiments of this application, the base station in the NR system is merely taken as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), or the like. It should be noted that in the embodiments of this application, the core network device in the NR system is merely taken as an example for introduction, and the specific type of the core network device is not limited.

For ease of understanding, some content involved in the embodiments of this application is explained below.
I. Multi-card user equipment (MUSIM UE), which may also be referred to as multi-universal subscriber identity module user equipment.

Currently, there are not only single-card terminals but also dual-card or multi-card terminals, and dual-card or multi-card terminals are collectively referred to as multi-card terminals.

A multi-card terminal may include multiple pieces of user equipment (User Equipment, UE), these UEs are referred to as MUSIM UEs. First UE may be one UE in the multi-card terminal. It should be noted that the UE may be considered as a subscription entity. Multiple subscription entities may be configured on one terminal. The subscription entity can be embodied through a universal subscriber identity module (Universal Subscriber Identity Module, SIM) card. One SIM card corresponds to one subscription entity of a network. The SIM card stores an identifier of the subscription entity, that is, an identifier of the UE, such as subscription permanent identifier (Subscription Permanent Identifier, SUPI) or international mobile subscription identity (International Mobile Subscription Identity, IMSI). Therefore, when multiple SIM cards are inserted into one terminal or when information of multiple electronic SIM cards is configured, the terminal and different subscription entities can form different UEs.

The capability of the multi-card terminal may be single-transmit single-receive, single-transmit dual-receive (Dual-Rx), dual-transmit dual-receive (Dual-Tx), or the like.

One characteristic of the multi-card terminals is their ability to simultaneously camp on multiple networks. However, the implementation of multi-SIM terminals varies. Some terminals can simultaneously implement transmission and reception in multiple networks without interference on each other.

Some multi-card terminals supporting dual-transmit dual-receive can simultaneously implement transmission and reception in multiple networks without interference on each other within specific frequency bands. Within other frequency bands, time division may be used to transmit and receive data on two networks.

### II. MUSIM gap.

If UE is in a connection state on network A, a gap is needed to perform MUSIM-purpose tasks on network B.

MUSIM purposes include:
at least one of cell identification and measurement, paging monitoring, system information block (System Information Block, SIB) reception, and on-demand system information request.

A network may provide at least one of at most three periodic gaps and one aperiodic gap.

For example, purposes of the three periodic gaps are as follows:
Gap1: for receiving a synchronization signal block (Synchronization Signal Block, SSB) and/or PEI, and performing serving cell measurement based on the SSB;
Gap2: for paging monitoring: paging message (Paging message); and
Gap3: for neighboring cell measurement.

Optionally, a paging early indication (Paging Early indication, PEI) is used to indicate, at a paging occasion (Paging Occasion, PO) associated with the paging early indication, whether there is UE paging corresponding to the PO. In a case that a PEI is configured, the UE first monitors the PEI and then decides whether to monitor the PO. Only when the UE has monitored the PEI and a PEI bit value of a group corresponding to the UE is "1", the UE monitors its corresponding PO; otherwise, the UE does not monitor the PO.

### III. Gap conflict handling.

A conflict may occur between configured MUSIM measurement gaps, or a conflict may also occur between a configured MUSIM measurement gap and a configured measurement gap. Currently, priority-based conflict solutions (or conflict handling manners) and coexistence-based conflict solutions can both be used for MUSIM gap conflict handling. To be specific, when a conflict occurs between two gaps with different priorities, a measurement gap with a lower priority is dropped. For the coexistence solution (Keep Solution), conflicts between MUSIM gaps are resolved by allowing all conflicting MUSIM gaps to coexist, meaning all conflicting MUSIM gaps are kept and no gaps are dropped.

The network configures priorities for measurement gaps within a range of [1, 16]. The user equipment can report a UE assistance information message, and provides MUSIM gap preference information, including priority preference of MUSIM gaps. The network can configure the MUSIM gaps based on the MUSIM gap preference information.

### IV. Behavior during gaps.

A MUSIM gap may be used to perform MUSIM-purpose tasks on network B. If the UE initiates random access before the MUSIM gap, the UE can monitor a random access response during the MUSIM gap and continue to perform a random access procedure.

The following provides a detailed description of a gap processing method provided by the embodiments of this application with some embodiments and application scenarios thereof in conjunction with the accompanying drawings.

Referring to FIG. 2, an embodiment of this application provides a gap processing method. As shown in FIG. 2, the gap processing method includes the following step.

Step 201: A master node performs a first operation towards a secondary node, where the first operation includes any one of the following:
sending first indication information, where the first indication information is used to indicate a conflict handling manner for a first gap;
sending a first request message, where the first request message is used to request a conflict handling manner for a first gap;
ignoring a second gap and sending second indication information to the secondary node in a case that target uplink information sent by user equipment has been detected during the second gap, where the second indication information is used to indicate that the second gap is ignored; and
receiving third indication information from the secondary node, where the third indication information is used to indicate that the second gap is ignored and the second gap is a gap in which the user equipment has sent target uplink information.

In this embodiment of this application, the first gap may include multiple gaps, and the multiple gaps may be of one type or at least two types, for example, at least one of a MUSIM gap and a measurement gap. Gap conflict can be understood as multiple gaps overlapping or being close in time. For example, in a case that a temporal interval between two gaps is less than a preset value, the two gaps may be considered to be in conflict. The above conflict handling manner can be understood a solution for handling conflicting gaps. Specifically, it may include a priority-based conflict handling manner and a conflict handling manner that keeps conflicting gaps, where the conflict handling manner that keeps conflicting gaps can be understood as or replaced with a coexistence-based conflict solution.

Optionally, in a case that the first operation includes sending first indication information, it can be understood that the master node can directly determine the conflict handling manner and indicate the conflict handling manner to the secondary node. In this way, it can be ensured that the secondary node and the master node maintain a consistent understanding of the gap conflict handling manner.

Optionally, the first operation includes sending a first request message, which can be understood as that the master node and the secondary node negotiate to determine the gap conflict handling manner, thereby ensuring that the secondary node and the master node maintain a consistent understanding of the gap conflict handling manner. It should be noted that when negotiating to determine the gap conflict handling manner, the secondary node can feed back corresponding information to the master node to indicate acceptance or rejection of the requested conflict handling manner. In some embodiments, to reduce signaling overheads, in a case that the master node has not received feedback for the first request message, it may be defaulted that the secondary node accepts the requested conflict handling manner, or it may be defaulted that the secondary node rejects the requested conflict handling manner. This is not further limited herein.

Optionally, in some embodiments, the first operation includes ignoring the second gap and sending second indication information to the secondary node in a case that target uplink information sent by the user equipment has been detected during the second gap. In this way, it can be ensured that the secondary node and the master node maintain a consistent understanding of gap use. In addition, since the user equipment can send the target uplink information during the gap, the time of the gap can be fully utilized, increasing the data transmission rate. Moreover, the master node and the secondary node can ignore the gap and use the gap for data transmission, thereby improving the transmission efficiency.

Optionally, in some embodiments, the first operation includes receiving third indication information from the secondary node. In this way, it can be ensured that the secondary node and the master node maintain a consistent understanding of the gap use. In addition, since the user equipment can send the target uplink information during the gap, the time of the gap can be fully utilized, increasing the data transmission rate. Moreover, the master node and the secondary node can ignore the gap and use the gap for data transmission, thereby improving the transmission efficiency.

It should be noted that configuration for a MUSIM gap usually includes the following process.

Step A1: A network (such as MN) receives a UE assistance information (UE Assistance Information) message sent by the UE, which includes MUSIM gap preference information, such as MUSIM gap configuration preference, MUSIM gap priority preference, and preference about whether to keep the gap in a case of a MUSIM gap conflict.

Step A2: The network sends MUSIM gap configuration information to the UE, which includes a MUSIM gap configuration, a MUSIM gap priority, whether to keep the gap in a case of a MUSIM gap conflict, and the like.

In this embodiment of this application, sending the first indication information may be performed between the above step A1 and step A2, or performed after step A2; sending the first request message may be performed between the above step A1 and step A2; and sending the second indication information and receiving the third indication information may usually be performed after step A2.

It should be noted that the above second gaps may be conflicting gaps or non-conflicting gaps. In a case that the second gaps are conflicting gaps, the second gaps may include at least one of gaps dropped based on priorities and gaps kept based on priorities, or the second gaps are at least some gaps kept based on the conflict handling manner that keeps gaps.

In this embodiment of this application, the master node performs the first operation towards the secondary node, where the first operation includes any one of the following: sending first indication information, where the first indication information is used to indicate a conflict handling manner for a first gap; sending a first request message, where the first request message is used to request a conflict handling manner for a first gap; ignoring a second gap and sending second indication information to the secondary node in a case that target uplink information sent by the user equipment has been detected during the second gap, where the second indication information is used to indicate that the second gap is ignored; and receiving third indication information from the secondary node, where the third indication information is used to indicate that the second gap is ignored and the second gap is a gap in which the user equipment has sent target uplink information. In this way, it can be ensured that the master node and the secondary node have a consistent understanding of a gap state, thereby improving the reliability of communication.

Optionally, in some embodiments, the conflict handling manner for the first gap includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

In this embodiment of this application, the priority-based conflict handling manner can be understood as dropping the gap with a lower priority in a case of a conflict between two gaps with different priorities. The conflict handling manner that keeps conflicting gaps can be understood as: a keeping manner is used for the conflict handling between the gaps, that is, all conflicting gaps are kept and no gaps are dropped.

Optionally, in some embodiments, the first indication information can explicitly or implicitly indicate the conflict handling manner for the first gap. For example, an indication field can be set, and the conflict handling manner for the first gap is explicitly indicated in the indication field, to be specific, the above first indication information may include first conflict resolution information, where the first conflict resolution information includes the conflict handling manner for the first gap. In some embodiments, the conflict handling manner for the first gap can be indicated by whether the first indication information includes a keeping indication or target priority information, where
the keeping indication is used to indicate using the conflict handling manner that keeps conflicting gaps; and
the target priority information is used to implicitly indicate using the priority-based conflict handling manner, where the target priority information is priority information of the gap.

In one implementation, the information sent by the master node to the secondary node includes a keeping indication, representing that the indicated conflict handling manner for the first gap is the conflict handling manner that keeps conflicting gaps; and the information sent by the master node to the secondary node does not include a keeping indication, representing that the indicated conflict handling manner for the first gap is the priority-based conflict handling manner.

In one implementation, the information sent by the master node to the secondary node includes target priority information, representing that the indicated conflict handling manner for the first gap is the priority-based conflict handling manner; and the information sent by the master node to the secondary node does not include target priority information, representing that the indicated conflict handling manner for the first gap is the conflict handling manner that keeps conflicting gaps.

In this embodiment of this application, the above target priority information may include priority information of all gaps, or include only priority information of different gaps in the first gap.

Optionally, the above keeping indication can be understood as an indication of using a keep solution. For example, the MN sends the keeping indication when using the conflict handling manner that keeps conflicting gaps. If the MN does not send the keeping indication when not using the conflict handling manner that keeps conflicting gaps, the SN uses the priority-based conflict handling manner.

Optionally, in some embodiments, the first indication information further includes the first gap, that is, at least one gap to which the gap conflict handling manner is applicable. For example, it may be a specific gap type, such as a MUSIM gap or measurement gap. It may alternatively be a gap group or gap list.

In some embodiments, the MN sends a gap configuration to the SN, and the SN can identify the first gap through the gap configuration.

Optionally, in some embodiments, in a case that the first indication information includes the target priority information, the conflict handling manner for the first gap is the priority-based conflict handling manner; and a case that the first indication information does not include the target priority information, the conflict handling manner for the first gap is the conflict handling manner that keeps conflicting gaps.

Optionally, in some embodiments, a target conflict handling manner is used for the conflict between first gaps. For example, the target conflict handling manner is used for the conflict between MUSIM gaps.

The target conflict handling manner can default to the priority-based conflict handling manner or the conflict handling manner that keeps conflicting gaps.

Optionally, in some embodiments, the first indication information may be part of gap configuration information (for example, musim-GapConfigInfo) (the gap configuration information includes the first indication information), and carried in a cell group configuration information (CG-ConfigInfo) message.

Optionally, in some embodiments, the conflict handling manner for the first gap requested in the first request information includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

In this embodiment of this application, the priority-based conflict handling manner can be understood as dropping the gap with a lower priority in a case of a conflict between two gaps with different priorities. The conflict handling manner that keeps conflicting gaps can be understood as: a keeping manner is used for the conflict handling between the gaps, that is, all conflicting gaps are kept and no gaps are dropped.

It should be noted that in this embodiment of this application, the requested conflict handling manner for the first gap can be explicitly or implicitly indicated. For example, an indication field can be set, and the requested conflict handling manner for the first gap is explicitly indicated in the indication field, that is, the above first request information may include second conflict resolution information, where the second conflict resolution information includes the requested conflict handling manner for the first gap. In some embodiments, the requested conflict handling manner for the first gap can be indicated by whether the first request information includes a keeping indication or target priority information, where
the keeping indication is used to indicate a request of using the conflict handling manner that keeps conflicting gaps; and
the target priority information is used to implicitly indicate a request of using the priority-based conflict handling manner.

In one implementation, the information sent by the master node to the secondary node includes a keeping indication, representing that the requested conflict handling manner for the first gap is the conflict handling manner that keeps conflicting gaps; and the information sent by the master node to the secondary node does not include a keeping indication, representing that the requested conflict handling manner for the first gap is the priority-based conflict handling manner.

In one implementation, the information sent by the master node to the secondary node includes target priority information, representing that the requested conflict handling manner for the first gap is the priority-based conflict handling manner; and the information sent by the master node to the secondary node does not include target priority information, representing that the requested conflict handling manner for the first gap is the conflict handling manner that keeps conflicting gaps.

Optionally, the request of the keeping indication can be understood as a request of using a keep solution. For example, the MN sends the request of the keeping indication when using the conflict handling manner that keeps conflicting gaps. If the MN does not send the request of the keeping indication when not using the conflict handling manner that keeps conflicting gaps, the SN uses the priority-based conflict handling manner.

Optionally, in some embodiments, the first request information further includes the first gap, that is, at least one gap to which the gap conflict handling manner is applicable. For example, it may be a specific gap type, such as a MUSIM gap or a measurement gap. It may alternatively be a gap group or gap list.

In some embodiments, the MN sends a gap configuration to the SN, and the SN can identify the first gap through the gap configuration.

Optionally, if the above first request information includes target priority information, it indicates a request of using the priority-based conflict handling manner rather than using the conflict handling manner that keeps conflicting gaps. If the first request information does not include target priority information, it indicates a request of using the conflict handling manner that keeps conflicting gaps rather than a request of using the priority-based conflict handling manner.

Optionally, in some embodiments, the first request information is part of gap configuration information (for example, musim-GapConfigInfo) (that is, the gap configuration information includes the first request information), and carried in a cell group configuration information (CG-ConfigInfo) message.

Optionally, in some embodiments, after the sending a first request message, the method further includes the following steps:
receiving, by the master node, confirmation information from the secondary node, where the confirmation information is used to indicate rejecting or accepting the conflict handling manner for the first gap; and
sending, by the master node, gap configuration information to the user equipment based on the confirmation information.

Optionally, in some embodiments, the confirmation information includes at least one of the following:
acceptance or rejection of the requested conflict handling manner for the first gap; and
acceptance or rejection of the keeping indication.

In these embodiments of this application, the acceptance or rejection of the requested conflict handling manner for the first gap can be understood as accepting or rejecting part or all of the information in the requested conflict handling manner for the first gap. For example, when the requested conflict handling manner for the first gap includes the priority-based conflict handling manner and the conflict handling manner that keeps conflicting gaps, the confirmation information may include accepting the priority-based conflict handling manner and rejecting the conflict handling manner that keeps conflicting gaps, may include rejecting the priority-based conflict handling manner and accepting the conflict handling manner that keeps conflicting gaps, may include accepting the priority-based conflict handling manner, may include accepting the conflict handling manner that keeps conflicting gaps, may include rejecting the conflict handling manner that keeps conflicting gaps, or may include rejecting the priority-based conflict handling manner.

In some embodiments, the confirmation information may alternatively not include information in the requested conflict handling manner for the first gap. For example, the MN requests the priority-based conflict handling manner, and the SN can accept the conflict handling manner that keeps conflicting gaps.

It should be understood that in these embodiments of this application, assuming that the priority-based conflict handling manner is requested, in a case that the SN accepts the priority-based conflict handling manner, the SN can provide a feedback about accepting the priority-based conflict handling manner; and in a case that the SN rejects the priority-based conflict handling manner, the SN can provide a feedback about rejecting the priority-based conflict handling manner, or does not feed back the confirmation information.

Optionally, in a case that the above first request information includes a request of the keeping indication, the SN can provide a feedback about confirming or rejecting the keeping indication.

Optionally, in some embodiments, the confirmation information is carried in a cell group configuration message.

Optionally, in some embodiments, the gap configuration information includes a gap configuration and a target conflict handling manner, where the target conflict handling manner is the conflict handling manner for the first gap determined based on the confirmation information.

In these embodiments of this application, the gap configuration information may further include gap priority information.

Optionally, data transmission may be performed during the gap in the following cases.

Case 1: When the gap is not used, data transmission is performed during the gap, increasing the data transmission rate.

For example, in a case that a PEI is configured, the UE first monitors the PEI and then decides whether to monitor the PO. Only when the UE has monitored the PEI and a PEI bit value of a group corresponding to the UE is "1", the UE monitors its corresponding PO; otherwise, the UE does not monitor the PO.

The UE is in a connection state on network A and is in an idle or inactive state on network B. If the UE needs a gap to perform MUSIM-purpose tasks on network B, such as paging monitoring, measurement, or PEI, network A may configure multiple gaps, where one gap is used for paging monitoring corresponding to the PO, and another gap is used for PEI monitoring or serving cell measurement.

If the PEI bit value of the group corresponding to the UE is not "1", the UE does not need to monitor the PO, that is, the gap used for monitoring the PO is not used. Generally, the paging probability is low, such as 10%. To be specific, the gap allocated for monitoring the PO is wasted with a probability of 90%. The use of these gaps can help to increase the data transmission rate.

Case 2: During the gap, the user equipment has a demand to send a signaling message, for example, the signaling message may include at least one of the following:
a radio resource control (Radio Resource Control, RRC) reestablishment request;
a master cell group fast recovery message (MCG Fast Recovery);
a secondary cell group failure information (SCG Failure Info) message;
a tracking area update (Tracking Area Update, TAU) or registration message; and
a measurement report message.

Optionally, in the above cases 1 and 2, the user equipment can send target uplink information. In some embodiments, the target uplink information includes at least one of the following:
an uplink data of a preset channel;
configuration-supported uplink data;
physical information;
a media access control (Medium Access Control, MAC) message;
a radio resource control RRC message; and
a non-access stratum (Non-Access Stratum, NAS) message.

Optionally, the above preset channel may include a physical uplink control channel (Physical Uplink Control Channel, PUCCH) or a physical uplink shared channel (Physical Uplink Shared Channel, PUSCH).

Optionally, the configuration-supported uplink data may include PUSCH transmission sent by a configured grant (CG-PUSCH (type 1 and type 2)).

Optionally, the above physical information may include a layer 1 reference signal received power (Reference Signal Received Power, RSRP) report (L1-RSRP report).

Optionally, the above MAC message may include at least one of the following:
a MAC control element (Control Element, CE), such as a buffer status report (Buffer Status Report, BSR);
a hybrid automatic repeat request (Hybrid automatic repeat request, HARQ); a scheduling request (Scheduling Request, SR);
channel state information (Channel State Information, CSI); and a sounding reference signal (Sounding Reference Signal, SRS) report.

Optionally, the above RRC message may include at least one of the following:
a measurement report (Measurement Report);
a radio resource control (Radio Resource Control, RRC) reestablishment request;
a master cell group fast recovery message (MCG Fast Recovery); and
a secondary cell group failure information (SCG Failure Info) message.

Optionally, the above NAS message may include at least one of a registration request and a tracking area update request (TAU Request).

In these embodiments of this application, data transmission may be performed during the gap in a case that the user equipment has the above demand to send a signaling message during the gap, so that a delay of sending of the above signaling message can be reduced, increasing the data transmission rate, and realizing more effective utilization of the gap.

Optionally, in some embodiments, before the ignoring a second gap and sending second indication information to the secondary node in a case that target uplink information sent by the user equipment has been detected during the second gap, or before the receiving third indication information from the secondary node, the method further includes the following step.

The master node sends target configuration information to the user equipment, and the target configuration information includes at least one of a target indication, a priority of the second gap relative to the target uplink information, and a channel supporting sending of the target uplink information, where the target indication is used to indicate that sending target uplink information by the user equipment is supported during the second gap.

In these embodiments of this application, the target configuration information may be sent to the user equipment by the master node. In other embodiments, the target configuration information may alternatively be sent to the user equipment by the secondary node.

It should be understood that the above target configuration information may be used to indicate whether to allow the UE to send the target uplink information.

Optionally, the priority information for the above target uplink information can be understood as priority information of one or more target uplink information, for example, the master node or secondary node configures a priority of the gap relative to an uplink or downlink signal.

Optionally, the channel supporting sending may include a PUSCH.

Optionally, in some embodiments, the user equipment sends the target uplink information during the second gap. Optionally, the user equipment sending the target uplink information includes at least one of the following:
in a case that a configured grant has been received before the second gap, the user equipment sends the target uplink information during the second gap;
in a case that a priority of the target uplink information is higher than that of the second gap, the user equipment sends the target uplink information during the second gap;
the target uplink information is allowed to be sent during the second gap; and
the target uplink information includes a master cell group fast recovery message.

In these embodiments of this application, assuming that the above target uplink information is information sent through the PUSCH, for example, if a cell group (Cell Group, CG) is received before the second gap, the user equipment may send the PUSCH during the second gap. To be specific, if the master node or secondary node sends the CG before the second gap, the master node or secondary node monitors a CG-PUSCH during the second gap.

It should be understood that support can be understood as or replaced with allow. For example, supporting the user equipment to send the target uplink information during the second gap can be understood as allowing the user equipment to send the target uplink information during the second gap. In this case, during the second gap, the user equipment can send the target uplink information, and the master node or secondary node can monitor the target uplink information.

Optionally, in some embodiments, a type of at least one of the first gap and the second gap includes at least one of the following:
a per-user equipment UE gap (Per-UE gap);
a per-cell group gap (Per-CG gap);
an uplink gap;
a downlink gap;
a periodic gap; and
an aperiodic gap.

In these embodiments of this application, one Per-UE gap is applicable to both MN and SN. For a per-UE gap, the MN and SN need to be consistent in gap configuration, conflict handling, and changes in gap use.

Optionally, in some embodiments, at least one of the first gap and the second gap includes at least one of the following:
a multi-universal subscriber identity module MUSIM gap; and
a measurement gap.

In these embodiments of this application, the UE may be configured with MUSIM gaps, but when a gap is useless or there is signaling to be sent or higher-priority data to be sent, uplink sending of the UE is allowed during the gap. Currently, MUSIM gaps include per-UE gaps. Therefore, coordination and consistency between MN and SN are also needed.

Optionally, in some embodiments, at least one of the second indication information and the third indication information includes related information of the second gap, where the related information includes at least one of the following:
a gap identifier;
a length of an dropped gap; and
the number of dropped gaps.

In these embodiments of this application, the above gap may be a periodic gap or an aperiodic gap. If the second gap is an aperiodic gap, ignoring the second gap can be understood as ignoring the entire second gap or ignoring a remaining time of the second gap. If the second gap is a periodic gap, ignoring the second gap can be understood as ignoring one or more gap occasions of the second gap. Ignoring an occasion of the second gap can be understood as ignoring a complete gap occasion of the second gap or ignoring a remaining time in the gap occasion of the second gap.

Optionally, the number of dropped gaps can be understood as dropped multiple consecutive gap occasions of the periodic gap.

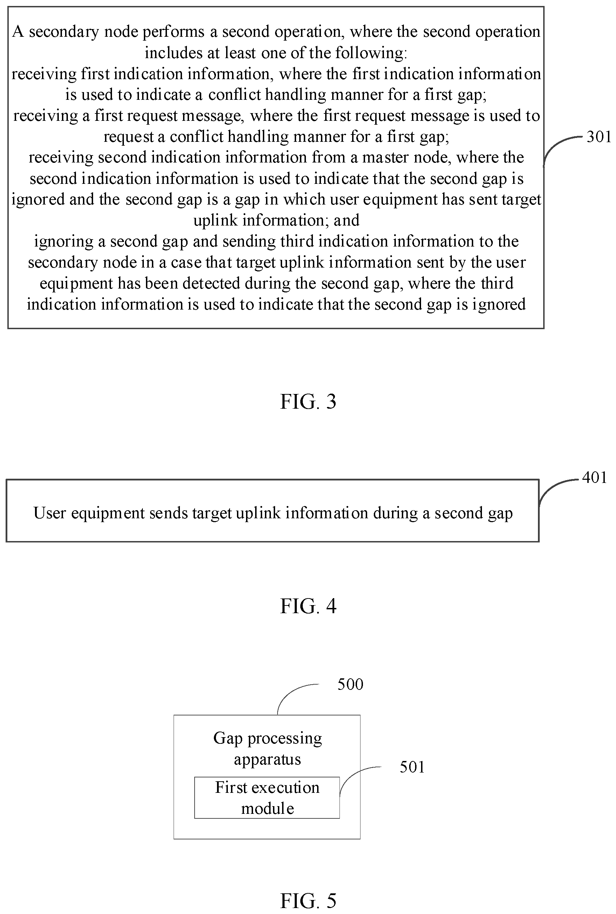

Referring to FIG. 3, an embodiment of this application further provides a gap processing method. As shown in FIG. 3, the gap processing method includes the following step.

Step 301: The secondary node performs a second operation, where the second operation includes at least one of the following:
receiving first indication information, where the first indication information is used to indicate a conflict handling manner for a first gap;
receiving a first request message, where the first request message is used to request a conflict handling manner for a first gap;
receiving second indication information from the master node, where the second indication information is used to indicate that the second gap is ignored and the second gap is a gap in which user equipment has sent target uplink information; and
ignoring a second gap and sending third indication information to the secondary node in a case that target uplink information sent by the user equipment has been detected during the second gap, where the third indication information is used to indicate that the second gap is ignored.

Optionally, the conflict handling manner for the first gap includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

Optionally, the conflict handling manner for the first gap is indicated by whether the first indication information includes a keeping indication or target priority information, where
the keeping indication is used to indicate using the conflict handling manner that keeps conflicting gaps; and
the target priority information is used to implicitly indicate using the priority-based conflict handling manner, where the target priority information is priority information of the gap.

Optionally, the first indication information further includes the first gap.

Optionally, the conflict handling manner for the first gap requested in the first request information includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

Optionally, the requested conflict handling manner for the first gap is indicated by whether the first request information includes a keeping indication or target priority information, where
the keeping indication is used to indicate a request of using the conflict handling manner that keeps conflicting gaps; and
the target priority information is used to implicitly indicate a request of using the priority-based conflict handling manner.

Optionally, after the receiving a first request message, the method further includes the following step.

The secondary node sends confirmation information to the master node, where the confirmation information is used to indicate rejecting or accepting the conflict handling manner for the first gap.

Optionally, the confirmation information includes at least one of the following:
acceptance or rejection of the requested conflict handling manner for the first gap; and
acceptance or rejection of the keeping indication.

Optionally, the confirmation information is carried in a cell group configuration message.

Optionally, at least one of the second indication information and the third indication information includes related information of the second gap, where the related information including at least one of the following:
a gap identifier;
a length of an dropped gap; and
the number of dropped gaps.

Optionally, before the receiving second indication information from the master node and ignoring the second gap in a case that target uplink information sent by the user equipment has been detected during the second gap, the method further includes the following step.

The secondary node sends target configuration information to the user equipment, and the target configuration information includes at least one of a target indication, a priority of the second gap relative to the target uplink information, and a channel supporting sending of the target uplink information, where the target indication is used to indicate that sending target uplink information by the user equipment is supported during the second gap.

Optionally, a type of at least one of the first gap and the second gap includes at least one of the following:
a per-user equipment UE gap;
a per-cell group gap;
an uplink gap;
a downlink gap;
a periodic gap; and
an aperiodic gap.

Optionally, at least one of the first gap and the second gap includes at least one of the following:
a multi-universal subscriber identity module MUSIM gap; and
a measurement gap.

Optionally, the target uplink information includes at least one of the following:
uplink data of a preset channel;
configuration-supported uplink data;
physical information;
a media access control MAC message;
a radio resource control RRC message; and
a non-access stratum NAS message.

Referring to FIG. 4, an embodiment of this application further provides a gap processing method. As shown in FIG. 4, the gap processing method includes the following step.

Step 401: User equipment sends target uplink information during a second gap, where the target uplink information includes at least one of the following:
uplink data of a preset channel;
configuration-supported uplink data;
physical information;
a media access control MAC message;
a radio resource control RRC message; and
a non-access stratum NAS message.

In this embodiment of this application, since data transmission is performed during the second gap, the data transmission rate can be increased.

Optionally, before the user equipment sends the target uplink information during the second gap, the method further includes the following step.

The user equipment obtains target configuration information, and the target configuration information includes at least one of a target indication, a priority of the second gap relative to the target uplink information, and a channel supporting sending of the target uplink information, where the target indication is used to indicate that the user equipment is allowed to send target uplink information during the second gap.

Optionally, the user equipment sending the target uplink information during the second gap includes at least one of the following:
in a case that a configured grant has been received before the second gap, the user equipment sends the target uplink information during the second gap;
in a case that a priority of the target uplink information is higher than that of the second gap, the user equipment sends the target uplink information during the second gap;
the target uplink information is allowed to be sent during the second gap; and
the target uplink information includes a master cell group fast recovery message.

The gap processing method provided by this embodiment of this application may be executed by a gap processing apparatus. In this embodiment of this application, the gap processing apparatus executing the gap processing method is taken as an example to illustrate the gap processing apparatus provided by this embodiment of this application.

Referring to FIG. 5, an embodiment of this application further provides a gap processing apparatus. As shown in FIG. 5, the gap processing apparatus 500 includes:
a first execution module 501, configured to perform a first operation towards a secondary node, where the first operation includes any one of the following:
sending first indication information, where the first indication information is used to indicate a conflict handling manner for a first gap;
sending a first request message, where the first request message is used to request a conflict handling manner for a first gap;
ignoring a second gap and sending second indication information to a secondary node in a case that target uplink information sent by user equipment has been detected during the second gap, where the second indication information is used to indicate that the second gap is ignored; and
receiving third indication information from the secondary node, where the third indication information is used to indicate that the second gap is ignored and the second gap is a gap in which the user equipment has sent target uplink information.

Optionally, the conflict handling manner for the first gap includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

Optionally, the conflict handling manner for the first gap is indicated by whether the first indication information includes a keeping indication or target priority information, where
the keeping indication is used to indicate using the conflict handling manner that keeps conflicting gaps; and
the target priority information is used to implicitly indicate using the priority-based conflict handling manner, where the target priority information is priority information of the gap.

Optionally, the first indication information further includes the first gap.

Optionally, the conflict handling manner for the first gap requested in the first request information includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

Optionally, the requested conflict handling manner for the first gap is indicated by whether the first request information includes a keeping indication or target priority information, where
the keeping indication is used to indicate a request of using the conflict handling manner that keeps conflicting gaps; and
the target priority information is used to implicitly indicate a request of using the priority-based conflict handling manner.

Optionally, the first execution module 501 is further configured to:
receive confirmation information from the secondary node, where the confirmation information is used to indicate rejecting or accepting the conflict handling manner for the first gap; and
send gap configuration information to the user equipment based on the confirmation information.

Optionally, the confirmation information includes at least one of the following:
acceptance or rejection of the requested conflict handling manner for the first gap; and
acceptance or rejection of the keeping indication.

Optionally, the confirmation information is carried in a cell group configuration message.

Optionally, the gap configuration information includes a gap configuration and a target conflict handling manner, where the target conflict handling manner is the conflict handling manner for the first gap determined based on the confirmation information.

Optionally, at least one of the second indication information and the third indication information includes related information of the second gap, where the related information including at least one of the following:
a gap identifier;
a length of an dropped gap; and
the number of dropped gaps.

Optionally, the first execution module 501 is further configured to:
send target configuration information to the user equipment, and the target configuration information includes at least one of a target indication, a priority of the second gap relative to the target uplink information, and a channel supporting sending of the target uplink information, where the target indication is used to indicate that sending target uplink information by the user equipment is supported during the second gap.

Optionally, a type of at least one of the first gap and the second gap includes at least one of the following:
a per-user equipment UE gap;
a per-cell group gap;
an uplink gap;
a downlink gap;
a periodic gap; and
an aperiodic gap.

Optionally, at least one of the first gap and the second gap includes at least one of the following:
a multi-universal subscriber identity module MUSIM gap; and
a measurement gap.

Optionally, the target uplink information includes at least one of the following:
uplink data of a preset channel;
configuration-supported uplink data;
physical information;
a media access control MAC message;
a radio resource control RRC message; and
a non-access stratum NAS message.

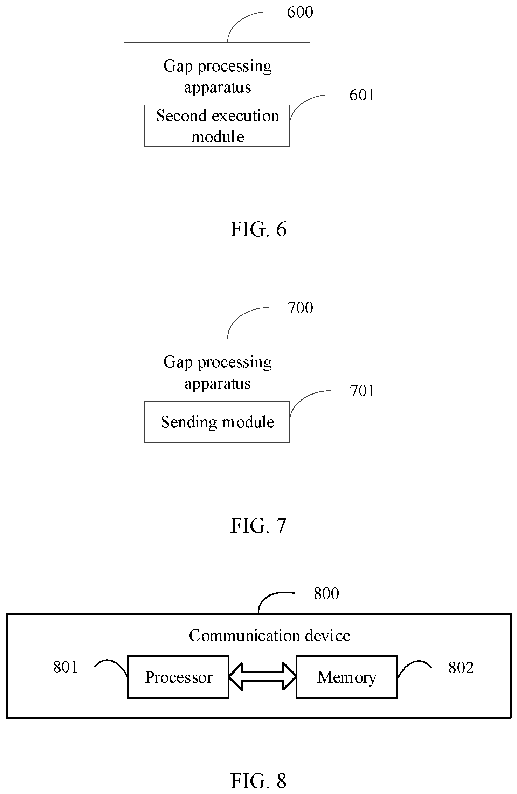

Referring to FIG. 6, an embodiment of this application further provides a gap processing apparatus. As shown in FIG. 6, the gap processing apparatus 600 includes:
a second execution module 601, configured to perform a second operation, where the second operation includes at least one of the following:
receiving first indication information, where the first indication information is used to indicate a conflict handling manner for a first gap;
receiving a first request message, where the first request message is used to request a conflict handling manner for a first gap;
receiving second indication information from a master node, where the second indication information is used to indicate that the second gap is ignored and the second gap is a gap in which user equipment has sent target uplink information; and
ignoring a second gap and sending third indication information to a secondary node in a case that target uplink information sent by the user equipment has been detected during the second gap, where the third indication information is used to indicate that the second gap is ignored.

Optionally, the conflict handling manner for the first gap includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

Optionally, the conflict handling manner for the first gap is indicated by whether the first indication information includes a keeping indication or target priority information, where
the keeping indication is used to indicate using the conflict handling manner that keeps conflicting gaps; and
the target priority information is used to implicitly indicate using the priority-based conflict handling manner, where the target priority information is priority information of the gap.

Optionally, the first indication information further includes the first gap.

Optionally, the conflict handling manner for the first gap requested in the first request information includes at least one of the following: a priority-based conflict handling manner and a conflict handling manner that keeps conflicting gaps; where
the priority-based conflict handling manner includes: in a case of a conflict between a gap with a first priority and a gap with a second priority, dropping the gap with the first priority, the first priority being lower than the second priority; and
the conflict handling manner that keeps conflicting gaps includes: in a case of a conflict between at least two gaps, keeping the at least two gaps.

Optionally, the requested conflict handling manner for the first gap is indicated by whether the first request information includes a keeping indication or target priority information, where
the keeping indication is used to indicate a request of using the conflict handling manner that keeps conflicting gaps; and
the target priority information is used to implicitly indicate a request of using the priority-based conflict handling manner.

Optionally, the second execution module 601 is further configured to: send confirmation information to the master node, where the confirmation information is used to indicate rejecting or accepting the conflict handling manner for the first gap.

Optionally, the confirmation information includes at least one of the following:
acceptance or rejection of the requested conflict handling manner for the first gap; and
acceptance or rejection of the keeping indication.

Optionally, the confirmation information is carried in a cell group configuration message.

Optionally, at least one of the second indication information and the third indication information includes related information of the second gap, where the related information including at least one of the following:
a gap identifier;
a length of an dropped gap; and
the number of dropped gaps.

Optionally, the second execution module 601 is further configured to: send target configuration information to the user equipment, and the target configuration information includes at least one of a target indication, a priority of the second gap relative to the target uplink information, and a channel supporting sending of the target uplink information, where the target indication is used to indicate that sending target uplink information by the user equipment is supported during the second gap.

Optionally, a type of at least one of the first gap and the second gap includes at least one of the following:
a per-user equipment UE gap;
a per-cell group gap;
an uplink gap;
a downlink gap;
a periodic gap; and
an aperiodic gap.

Optionally, at least one of the first gap and the second gap includes at least one of the following:
a multi-universal subscriber identity module MUSIM gap; and
a measurement gap.

Optionally, the target uplink information includes at least one of the following:
uplink data of a preset channel;
configuration-supported uplink data;
physical information;
a media access control MAC message;
a radio resource control RRC message; and
a non-access stratum NAS message.

Referring to FIG. 7, an embodiment of this application further provides a gap processing apparatus. As shown in FIG. 7, the gap processing apparatus 700 includes:
a sending module 701, configured to send target uplink information during a second gap, where the target uplink information includes at least one of the following:
uplink data of a preset channel;
configuration-supported uplink data;
physical information;
a media access control MAC message;
a radio resource control RRC message; and
a non-access stratum NAS message.

Optionally, the gap processing apparatus 700 further includes:
a receiving module, configured to obtain target configuration information, and the target configuration information includes at least one of a target indication, a priority of the second gap relative to the target uplink information, and a channel supporting sending of the target uplink information, where the target indication is used to indicate that user equipment is allowed to send target uplink information during the second gap.

Optionally, the sending module 701 is specifically configured to perform at least one of the following:
in a case that a configured grant has been received before the second gap, the user equipment sends target uplink information during the second gap;
in a case that a priority of the target uplink information is higher than that of the second gap, the user equipment sends the target uplink information during the second gap;
the target uplink information is allowed to be sent during the second gap; and
the target uplink information includes a master cell group fast recovery message.

The gap processing apparatus in this embodiment of this application may be an electronic device, for example, an electronic device with an operating system, or a component in an electronic device, such as an integrated circuit or a chip. The electronic device may be user equipment or other devices than the user equipment. Exemplarily, the user equipment may include but is not limited to the types of the terminal 11 listed above, and the other devices may be servers, network attached storages (Network Attached Storage, NAS), or the like. This is not specifically limited in this embodiment of this application.

The gap processing apparatus provided by this embodiment of this application can implement the processes implemented by the method embodiments in FIG. 2 to FIG. 4, with the same technical effects achieved. To avoid repetition, details are not described herein again.

As shown in FIG. 8, an embodiment of this application further provides a communication device 800, including a processor 801 and a memory 802. A program or instructions executable on the processor 801 are stored on the memory 802. When the program or instructions are executed by the processor 801, the steps of the above gap processing method embodiments are implemented, with the same technical effects achieved. To avoid repetition, details are not described herein again.

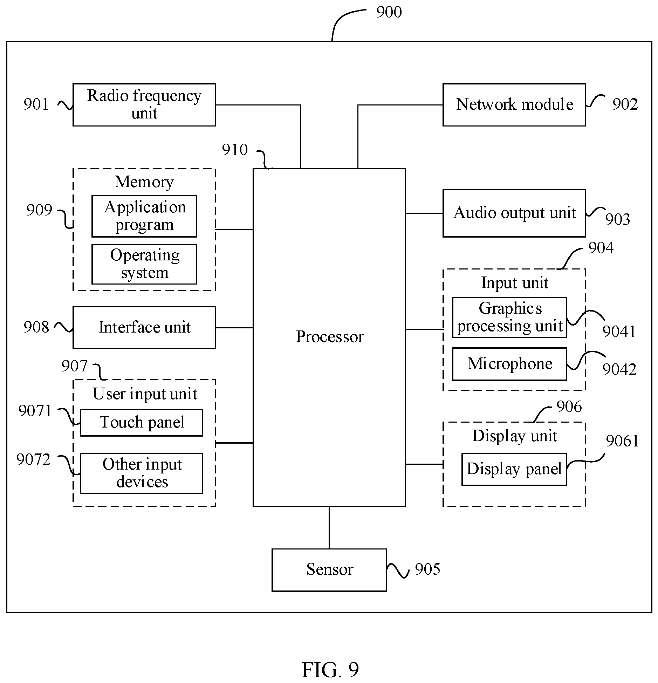

An embodiment of this application further provides user equipment, including a processor and a communication interface. The communication interface is coupled to the processor, and the processor is configured to run a program or instructions to implement the steps in the method embodiment shown in FIG. 4. This user equipment embodiment corresponds to the above user equipment side method embodiments, and all the implementation processes and implementations of the above method embodiments are applicable to this user equipment embodiment, with the same technical effects achieved. Specifically, FIG. 9 is a schematic diagram of a hardware structure of user equipment implementing an embodiment of this application.

The user equipment 900 includes but is not limited to at least some components of: a radio frequency unit 901, a network module 902, an audio output unit 903, an input unit 904, a sensor 905, a display unit 906, a user input unit 907, an interface unit 908, a memory 909, and a processor 910.

Those skilled in the art can understand that the user equipment 900 may further include a power supply (such as a battery) for supplying power to each component. The power supply may be logically connected to the processor 910 through a power management system, thereby implementing functions such as charging management, discharging management, and power consumption management through the power management system. The user equipment structure shown in FIG. 9 does not constitute a limitation to the user equipment. The user equipment may include more or fewer components than shown, or combine some components, or arrange different components. Details are not described herein again.

It should be understood that, in this embodiment of this application, the input unit 904 may include a graphics processing unit (Graphics Processing Unit, GPU) 9041 and a microphone 9042. The graphics processing unit 9041 is configured to process image data of still pictures or videos obtained by an image capture apparatus (such as a camera) in a video capture mode or an image capture mode. The display unit 906 may include a display panel 9061, where the display panel 9061 may be configured in the form of a liquid crystal display, an organic light emitting diode, or the like. The user input unit 907 includes at least one of a touch panel 9071 and other input devices 9072. The touch panel 9071 is also referred to as a touch screen. The touch panel 9071 may include two parts: a touch detection apparatus and a touch controller. The other input devices 9072 may include but are not limited to physical keyboards, function buttons (such as volume control buttons and switch buttons), trackballs, mice, and joysticks. Details are not described herein again.

In this embodiment of this application, after receiving downlink data from a network-side device, the radio frequency unit 901 can transmit the downlink data to the processor 910 for processing. In addition, the radio frequency unit 901 can send uplink data to the network-side device. Generally, the radio frequency unit 901 includes but is not limited to an antenna, an amplifier, a transceiver, a coupler, a low noise amplifier, and a duplexer.

The memory 909 may be configured to store a software program or instructions as well as various data. The memory 909 may mainly include a first storage area storing the program or instructions and a second storage area storing the data, where the first storage area can store an operating system, an application program or instructions required for at least one function (such as a sound playback function and an image playback function). In addition, the memory 909 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 909 in this embodiment of this application includes but is not limited to these and any other suitable types of memory.

The processor 910 may include one or more processing units. Optionally, the processor 910 integrates an application processor and a modem processor, where the application processor mainly processes operations related to the operating system, a user interface, the application program, and the like; and the modem processor mainly processes wireless communication signals, for example, being a baseband processor. It can be understood that the above modem processor may alternatively not be integrated into the processor 910.

The radio frequency unit 901 is configured to send target uplink information during a second gap, where the target uplink information includes at least one of the following:
uplink data of a preset channel;
configuration-supported uplink data;
physical information;
a media access control MAC message;
a radio resource control RRC message; and
a non-access stratum NAS message.

It can be understood that for the implementation processes of the various implementations mentioned in this embodiment, reference may be made to the relevant descriptions of the user equipment side method embodiments, with the same or corresponding technical effects achieved. To avoid repetition, details are not described herein again.

An embodiment of this application further provides a network-side device, including a processor and a communication interface. The communication interface is coupled to the processor, and the processor is configured to run a program or instructions to implement the steps of the method embodiment shown in FIG. 2 or FIG. 3. This network-side device embodiment corresponds to the above network-side device method embodiments, and all the implementation processes and implementations of the above method embodiments are applicable to this network-side device embodiment, with the same technical effects achieved.

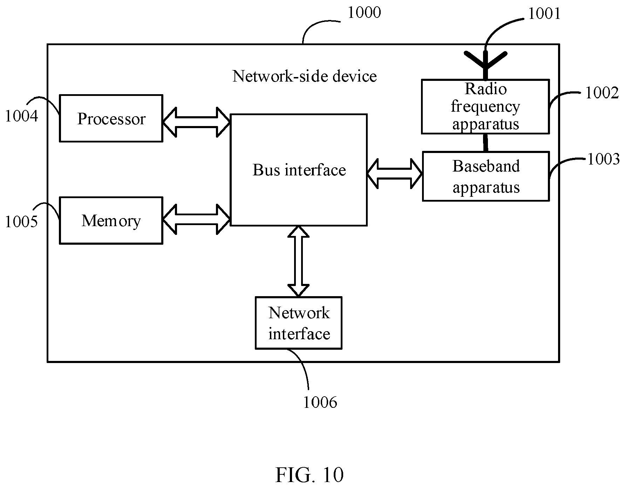

Specifically, an embodiment of this application further provides a network-side device. As shown in FIG. 10, the network-side device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001 and sends the received information to the baseband apparatus 1003 for processing. In a downlink direction, the baseband apparatus 1003 processes information to be sent and sends it to the radio frequency apparatus 1002. After the radio frequency apparatus 1002 processes the received information, the information is sent out through the antenna 1001.

The method executed by the network-side device in the above embodiment can be implemented in the baseband apparatus 1003, and the baseband apparatus 1003 includes a baseband processor.

The baseband apparatus 1003 may, for example, include at least one baseband board, where the baseband board is provided with multiple chips. As shown in FIG. 10, one of the chips is, for example, a baseband processor, and is connected to the memory 1005 through a bus interface to call a program in the memory 1005 to execute operations of the network device shown in the above method embodiments.

The network-side device may further include a network interface 1006, where the interface is, for example, a common public radio interface (Common Public Radio Interface, CPRI).

Specifically, the network-side device 1000 of this embodiment of this application further includes: instructions or a program stored on the memory 1005 and executable on the processor 1004. The processor 1004 calls the instructions or program in the memory 1005 to execute the methods executed by each module shown in FIG. 5 or FIG. 6, with the same technical effects achieved. To avoid repetition, details are not described herein again.

An embodiment of this application further provides a readable storage medium, where a program or instructions are stored on the readable storage medium. When the program or instructions are executed by a processor, the processes of the above gap processing method embodiments are implemented, with the same technical effects achieved. To avoid repetition, details are not described herein again.

The processor is a processor in the user equipment described in the above embodiments. The readable storage medium includes a computer readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the above gap processing method embodiments, with the same technical effects achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium, and the computer program/program product is executed by at least one processor to implement the processes of the above gap processing method embodiments, with the same technical effects achieved. To avoid repetition, details are not described herein again.

An embodiment of this application further provides a wireless communication system, including: user equipment and a network-side device. The user equipment is configured to perform the steps of the gap processing methods on the user equipment side described above, and the network-side device is configured to perform the steps of the gap processing method on the master node or secondary node side described above.

It should be noted that, the terms "include", "comprise", or any other variants thereof herein are intended to cover non-exclusive inclusion, so that a process, method, article or apparatus including a series of elements not only includes those elements, but also includes other elements not explicitly listed, or also includes elements inherent to such process, method, article or apparatus. Without further limitation, an element defined by the statement "including one ..." does not exclude the presence of additional identical elements in the process, method, article or apparatus including the element. In addition, it should be noted that the scope of the methods and apparatuses in the embodiments of this application is not limited to executing the functions in the order shown or discussed, and the functions may alternatively be performed in a substantially simultaneous manner or in a reverse order according to involved functions. For example, the described methods may be executed in an order different from that described, and various steps may also be added, omitted, or combined. Additionally, features described with reference to some examples may be combined in other examples.

Through the description of the above implementations, those skilled in the art can clearly understand that the above method embodiments can be implemented by means of a computer software product plus a necessary general hardware platform, and certainly can also be implemented by hardware. The computer software product is stored in a storage medium (such as a ROM, a RAM, a magnetic disk, or an optical disk), and includes several instructions to enable user equipment or a network-side device to execute the methods described in the embodiments of this application.

The embodiments of this application have been described above in conjunction with the accompanying drawings, but this application is not limited to the above specific embodiments. The above specific embodiments are merely illustrative rather than restrictive. Those of ordinary skill in the art can make embodiments in many forms under the inspiration of this application without departing from the principle and scope protected by the claims of this application. All these embodiments fall within the protection scope of this application.

## Claims

1. A gap processing method, comprising:
performing, by a master node, a first operation towards a secondary node, wherein the first operation comprises any one of the following:
sending first indication information, wherein the first indication information is used to indicate a conflict handling manner for a first gap;
sending a first request message, wherein the first request message is used to request a conflict handling manner for a first gap;
ignoring a second gap and sending second indication information to the secondary node in a case that target uplink information sent by user equipment has been detected during the second gap, wherein the second indication information is used to indicate that the second gap is ignored; and
receiving third indication information from the secondary node, wherein the third indication information is used to indicate that the second gap is ignored and the second gap is a gap in which the user equipment has sent target uplink information.

2. The method according to claim 1, wherein the conflict handling manner for the first gap comprises at least one of the following: a priority-based conflict handling manner and a conflict handling manner that keeps conflicting gaps; wherein
the priority-based conflict handling manner comprises: in a case of a conflict between a gap with a first priority and a gap with a second priority, dropping the gap with the first priority, the first priority being lower than the second priority; and
the conflict handling manner that keeps conflicting gaps comprises: in a case of a conflict between at least two gaps, keeping the at least two gaps.

3. The method according to claim 1 or 2, wherein the conflict handling manner for the first gap is indicated by whether the first indication information comprises a keeping indication or target priority information; wherein
the keeping indication is used to indicate using the conflict handling manner that keeps conflicting gaps; and
the target priority information is used to implicitly indicate using the priority-based conflict handling manner, wherein the target priority information is priority information of the gap.

4. The method according to any one of claims 1 to 3, wherein the first indication information further comprises the first gap.

5. The method according to claim 1, wherein the conflict handling manner for the first gap requested in the first request information comprises at least one of the following: a priority-based conflict handling manner and a conflict handling manner that keeps conflicting gaps; wherein
the priority-based conflict handling manner comprises: in a case of a conflict between a gap with a first priority and a gap with a second priority, dropping the gap with the first priority, the first priority being lower than the second priority; and
the conflict handling manner that keeps conflicting gaps comprises: in a case of a conflict between at least two gaps, keeping the at least two gaps.

6. The method according to claim 1 or 5, wherein the requested conflict handling manner for the first gap is indicated by whether the first request information comprises a keeping indication or target priority information; wherein
the keeping indication is used to indicate a request of using the conflict handling manner that keeps conflicting gaps; and
the target priority information is used to implicitly indicate a request of using the priority-based conflict handling manner.

7. The method according to claim 6, wherein after the sending a first request message, the method further comprises:
receiving, by the master node, confirmation information from the secondary node, wherein the confirmation information is used to indicate rejecting or accepting the conflict handling manner for the first gap; and
sending, by the master node, gap configuration information to the user equipment based on the confirmation information.

8. The method according to claim 7, wherein the confirmation information comprises at least one of the following:
acceptance or rejection of the requested conflict handling manner for the first gap; and
acceptance or rejection of the keeping indication.

9. The method according to claim 7, wherein the confirmation information is carried in a cell group configuration message.

10. The method according to claim 7, wherein the gap configuration information comprises a gap configuration and a target conflict handling manner, wherein the target conflict handling manner is the conflict handling manner for the first gap determined based on the confirmation information.

11. The method according to claim 1, wherein at least one of the second indication information and the third indication information comprises related information of the second gap, and the related information comprises at least one of the following:
a gap identifier;
a length of an dropped gap; and
the number of dropped gaps.

12. The method according to claim 1, wherein before the ignoring a second gap and sending second indication information to the secondary node in a case that target uplink information sent by user equipment has been detected during the second gap, or before the receiving third indication information from the secondary node, the method further comprises:
sending, by the master node, target configuration information to the user equipment, wherein the target configuration information comprises at least one of a target indication, a priority of the second gap relative to the target uplink information, and a channel supporting sending of the target uplink information, wherein the target indication is used to indicate that sending target uplink information by the user equipment is supported during the second gap.

13. The method according to any one of claims 1 to 12, wherein a type of at least one of the first gap and the second gap comprises at least one of the following:
a per-user equipment UE gap;
a per-cell group gap;
an uplink gap;
a downlink gap;
a periodic gap; and
an aperiodic gap.

14. The method according to any one of claims 1 to 13, wherein at least one of the first gap and the second gap comprises at least one of the following:
a multi-universal subscriber identity module MUSIM gap; and
a measurement gap.

15. The method according to any one of claims 1 to 14, wherein the target uplink information comprises at least one of the following:
uplink data of a preset channel;
configuration-supported uplink data;
physical information;
a media access control MAC message;
a radio resource control RRC message; and
a non-access stratum NAS message.

16. A gap processing method, comprising:
performing, by a secondary node, a second operation, wherein the second operation comprises at least one of the following:
receiving first indication information, wherein the first indication information is used to indicate a conflict handling manner for a first gap;
receiving a first request message, wherein the first request message is used to request a conflict handling manner for a first gap;
receiving second indication information from a master node, wherein the second indication information is used to indicate that a second gap is ignored and the second gap is a gap in which the user equipment has sent target uplink information; and
ignoring a second gap and sending third indication information to the secondary node in a case that target uplink information sent by the user equipment has been detected during the second gap, wherein the third indication information is used to indicate that the second gap is ignored.

17. The method according to claim 16, wherein the conflict handling manner for the first gap comprises at least one of the following: a priority-based conflict handling manner and a conflict handling manner that keeps conflicting gaps; wherein
the priority-based conflict handling manner comprises: in a case of a conflict between a gap with a first priority and a gap with a second priority, dropping the gap with the first priority, the first priority being lower than the second priority; and
the conflict handling manner that keeps conflicting gaps comprises: in a case of a conflict between at least two gaps, keeping the at least two gaps.

18. The method according to claim 16 or 17, wherein the conflict handling manner for the first gap is indicated by whether the first indication information comprises a keeping indication or target priority information; wherein
the keeping indication is used to indicate using the conflict handling manner that keeps conflicting gaps; and
the target priority information is used to implicitly indicate using the priority-based conflict handling manner, wherein the target priority information is priority information of the gap.

19. The method according to any one of claims 16 to 18, wherein the first indication information further comprises the first gap.

20. The method according to claim 16, wherein the conflict handling manner for the first gap requested in the first request information comprises at least one of the following: a priority-based conflict handling manner and a conflict handling manner that keeps conflicting gaps; wherein
the priority-based conflict handling manner comprises: in a case of a conflict between a gap with a first priority and a gap with a second priority, dropping the gap with the first priority, the first priority being lower than the second priority; and
the conflict handling manner that keeps conflicting gaps comprises: in a case of a conflict between at least two gaps, keeping the at least two gaps.

21. The method according to claim 16 or 20, wherein the requested conflict handling manner for the first gap is indicated by whether the first request information comprises a keeping indication or target priority information; wherein
the keeping indication is used to indicate a request of using the conflict handling manner that keeps conflicting gaps; and
the target priority information is used to implicitly indicate a request of using the priority-based conflict handling manner.

22. The method according to claim 21, wherein after the receiving a first request message, the method further comprises:
sending, by the secondary node, confirmation information to the master node, wherein the confirmation information is used to indicate rejecting or accepting the conflict handling manner for the first gap.

23. The method according to claim 22, wherein the confirmation information comprises at least one of the following:
acceptance or rejection of the requested conflict handling manner for the first gap; and
acceptance or rejection of the keeping indication.

24. The method according to claim 22, wherein the confirmation information is carried in a cell group configuration message.

25. The method according to claim 16, wherein at least one of the second indication information and the third indication information comprises related information of the second gap, and the related information comprises at least one of the following:
a gap identifier;
a length of an dropped gap; and
the number of dropped gaps.

26. The method according to claim 16, wherein before the receiving second indication information from the master node or before the ignoring a second gap in a case that target uplink information sent by user equipment has been detected during the second gap, the method further comprises:
sending, by the secondary node, target configuration information to the user equipment, wherein the target configuration information comprises at least one of a target indication, a priority of the second gap relative to the target uplink information, and a channel supporting sending of the target uplink information, wherein the target indication is used to indicate that sending target uplink information by the user equipment is supported during the second gap.

27. The method according to any one of claims 16 to 26, wherein a type of at least one of the first gap and the second gap comprises at least one of the following:
a per-user equipment UE gap;
a per-cell group gap;
an uplink gap;
a downlink gap;
a periodic gap; and
an aperiodic gap.

28. The method according to any one of claims 16 to 27, wherein at least one of the first gap and the second gap comprises at least one of the following:
a multi-universal subscriber identity module MUSIM gap; and
a measurement gap.

29. The method according to any one of claims 16 to 28, wherein the target uplink information comprises at least one of the following:
uplink data of a preset channel;
configuration-supported uplink data;
physical information;
a media access control MAC message;
a radio resource control RRC message; and
a non-access stratum NAS message.

30. A gap processing method, comprising:
sending, by user equipment, target uplink information during a second gap, wherein the target uplink information comprises at least one of the following:
uplink data of a preset channel;
configuration-supported uplink data;
physical information;
a media access control MAC message;
a radio resource control RRC message; and
a non-access stratum NAS message.

31. The method according to claim 30, wherein before the sending, by user equipment, target uplink information during a second gap, the method further comprises:
obtaining, by the user equipment, target configuration information, wherein the target configuration information comprises at least one of a target indication, a priority of the second gap relative to the target uplink information, and a channel supporting sending of the target uplink information, wherein the target indication is used to indicate that the user equipment is allowed to send the target uplink information during the second gap.

32. The method according to claim 30, wherein the sending, by user equipment, target uplink information during a second gap comprises at least one of the following:
sending, by the user equipment, target uplink information during the second gap in a case that a configured grant has been received before the second gap; and
sending, by the user equipment, the target uplink information during the second gap in a case that a priority of the target uplink information is higher than that of the second gap; wherein
the target uplink information is allowed to be sent during the second gap; and
the target uplink information comprises a master cell group fast recovery message.

33. A gap processing apparatus, comprising:
a first execution module, configured to perform a first operation towards a secondary node, wherein the first operation comprises any one of the following:
sending first indication information, wherein the first indication information is used to indicate a conflict handling manner for a first gap;
sending a first request message, wherein the first request message is used to request a conflict handling manner for a first gap;
ignoring a second gap and sending second indication information to the secondary node in a case that target uplink information sent by user equipment has been detected during the second gap, wherein the second indication information is used to indicate that the second gap is ignored; and
receiving third indication information from the secondary node, wherein the third indication information is used to indicate that the second gap is ignored and the second gap is a gap in which the user equipment has sent target uplink information.

34. A gap processing apparatus, comprising:
a second execution module, configured to perform a second operation, wherein the second operation comprises at least one of the following:
receiving first indication information, wherein the first indication information is used to indicate a conflict handling manner for a first gap;
receiving a first request message, wherein the first request message is used to request a conflict handling manner for a first gap;
receiving second indication information from a master node, wherein the second indication information is used to indicate that a second gap is ignored and the second gap is a gap in which user equipment has sent target uplink information; and
ignoring a second gap and sending third indication information to the secondary node in a case that target uplink information sent by the user equipment has been detected during the second gap, wherein the third indication information is used to indicate that the second gap is ignored.

35. A gap processing apparatus, comprising:
a sending module, configured to send target uplink information during a second gap, wherein the target uplink information comprises at least one of the following:
uplink data of a preset channel;
configuration-supported uplink data;
physical information;
a media access control MAC message;
a radio resource control RRC message; and
a non-access stratum NAS message.

36. User equipment, comprising a processor and a memory, wherein the memory stores a program or instructions executable on the processor, and when the program or instructions are executed by the processor, the steps of the gap processing method according to any one of claims 30 to 32 are implemented.

37. A network-side device, comprising a processor and a memory, wherein the memory stores a program or instructions executable on the processor, and when the program or instructions are executed by the processor, the steps of the gap processing method according to any one of claims 1 to 29 are implemented.

38. A readable storage medium, wherein a program or instructions are stored on the readable storage medium, and when the program or instructions are executed by a processor, the steps of the gap processing method according to any one of claims 1 to 32 are implemented.
